# EUROPÄISCHE PATENTSCHRIFT

(11) **EP 0 829 198 B1**
(45) Veröffentlichungstag und Bekanntmachung des Hinweises auf die Patenterteilung: **02.01.2002**
(21) Anmeldenummer: 97115429.9
(22) Anmeldetag: 06.09.1997
(51) Int. Cl.: A01F 29/20

(54) **Häckselvorrichtung**
Forage harvester
Hacheuse

(30) Priorität: 16.09.1996 AT 163496
(43) Veröffentlichungstag der Anmeldung: 18.03.1998
(73) Patentinhaber: Busatis GmbH, 3251 Purgstall (AT)
(72) Erfinder: Jordan, Reinhard, Dkfm., 3251 Purgstall (AT)
(74) Vertreter: Puchberger, Rolf, Dipl. Ing.

(56) Entgegenhaltungen:
- EP-A- 0 022 053
- AT-A- 398 509

## Beschreibung

Die Erfindung betrifft eine Häckselvorrichtung zum Häckseln von Schneidgut mit Häckselmessern und einer mit den Häckselmessern zusammenwirkenden Gegenschneide, wobei die Häckselmesser und die Gegenschneide im Bereich ihrer Schneidkanten jeweils Hartmetallbeschichtungen aufweisen und die im Betrieb der Vorrichtung zwischen jeweils einem Häckselmesser und der Gegenschneide befindliche Menge an Schneidgut über die Länge der Gegenschneide bzw. des Häckselmessers variiert.

Solche Vorrichtungen zur Zerkleinerung von Schneidgut sind aus der Literatur und auch aus der Praxis gut bekannt. So beschreibt zB. die AT-B-398.509 eine solche Häckselmaschine, bei der die Gegenschneide besonders vorteilhaft mit Hartmetallbeschichtungen versehen ist.

Bei Scheibenradhäckslern sind die Messer wie die Speichen eines Rades, d.h. radial oder annähernd radial von innen nach aussen verlaufend um eine Welle angeordnet und arbeiten mit einer meist U-förmig ausgebildeten Gegenschneide zusammen. Bei Trommelhäckslern befinden sich die Messer auf der Mantelfläche eines um eine Drehwelle gedacht angeordneten Zylinders und arbeiten gegen eine Gegenschneide, die parallel zur Drehachse des Zylinders ebenfalls an dessen Oberfläche angeordnet ist.

Es hat sich als vorteilhaft erwiesen, daß bei der Berührung von einem Häckselmesser mit der Gegenschneide die beiden Schneidkanten einen endlichen Winkel miteinander einschließen, das heißt die Schneidkanten von Häckselmessern und Gegenschneide sind nicht parallel zueinander, sodaß sich beim Schneidevorgang ein Schnittpunkt und keine Schnittlinie und damit ein ziehender Schnitt ergibt. Dadurch kann die Härte des Schnittguts und die Menge des Schnittguts an einer Längsposition der Schneidkanten die Schnittqualität an einer anderen Längsposition nicht beeinflussen. Der Schnittpunkt wandert dabei von einem Ende des Messers und der Gegenschneide zu dem anderen Ende des Messers und der Gegenschneide. Bei einem derartigen Schnittvorgang wird Schneidgut an jenes Ende der Gegenschneide bzw. des Häckselmessers geschoben, das später schneidet und dadurch kommt es an diesem Ende zur Akkumulierung von Schneidgut und damit zu einer stärkeren Abnutzung der Hartmetallbeschichtung in diesem Bereich. Die ungleiche Abnützung der Hartmetallschicht auf der Gegenschneide und auch auf dem Häckselmesser führt zu der unökonomischen Tatsache, daß die Gegenschneiden bzw. die Messer zu einem Zeitpunkt ausgetauscht werden müssen, an dem die Hartmetallbeschichtung an dem einen Ende der Gegenschneide bzw. des Häckselmessers bereits vollständig abgenützt wurde, am anderen Ende der Gegenschneide bzw. des Häckselmessers wäre die Hartmetallschicht jedoch noch hinreichend dick, um für den Schneidvorgang eingesetzt werden zu können.

Dieselbe Problematik ergibt sich bei Häckslern, bei denen von vornherein eine asymmetrische Zufuhr von Schneidgut gegeben ist.

Aufgabe der vorliegenden Erfindung ist es, eine Häckselvorrichtung zu schaffen, bei der die Gegenschneiden und/oder Häckselmesser in den höher beanspruchten Bereichen einen höheren Verschleißwiderstand bieten, sodaß die gesamte Lebensdauer der Messer bzw. der Gegenschneide erhöht wird.

Die Aufgabe wird dadurch gelöst, daß die Dicke der Hartmetallbeschichtung auf der Gegenschneide und/oder dem Häckselmesser über die Länge der Gegenschneide bzw. des Häckselmessers variiert. In jenem Bereich der Hartmetallbeschichtung, in dem mehr Schneidgut geschnitten wird und daher eine höhere Abnutzung der Hartmetallbeschichtung erfolgt ist die Schicht dicker. Bis die Abnützung an dieser Stelle soweit fortggeschritten ist, daß ein Austausch der Gegenschneide bzw. des Messers erforderlich ist, ist die Abnutzung in jenem Bereich, wo weniger Schneidgut geschnitten wird auch schon so weit fortgeschritten, daß bei Austausch der Gegenschneide bzw. des Messers nicht mehr von Verschwendung von teurem Hartmetall gesprochen werden kann.

Vorzugsweise ist die Dicke der Hartmetallbeschichtung auf der Gegenschneide und/oder dem Häckselmesser in jenem Längsabschnitt der Gegenschneide bzw. des Häckselmessers in welchem die größte Menge an Schneidgut ist, bis zu dreimal so groß wie in den übrigen Längsabschnitten.

Nach einer besonderen Ausführungsform der Erfindung besteht die Hartmetallbeschichtung auf der Gegenschneide und/oder dem Häckselmesser aus mehreren übereinander liegenden Hartmetallschichten, wobei die Anzahl der übereinanderliegenden Hartmetallschichten über die Länge der Gegenschneide bzw. des Häckselmessers variiert. Dadurch entstehen zwar feine Stufen auf der Oberfläche der Hartmetallbeschichtung jedoch läßt sich auf diese Weise die erfindungsgemäße Hartmetallbeschichtung sehr einfach und kostengünstig herstellen.

Nach einer anderen bevorzugten Ausführungsvariante der Erfindung ist die Hartmetallbeschichtung eine mit der Gegenschneide und/oder dem Häckselmesser verbundene Hartmetalleiste, die über die Länge der Gegenschneide bzw. des Häckselmessers keilförmig ist. Das heißt es wird zuerst eine Hartmetalleiste hergestellt, deren Dicke über ihre Länge variiert und diese keilförmige Hartmetalleiste wird dann mit entsprechenden Verfahren auf die Gegenschneide bzw. das Häckselmesser aufgebracht.

Vorteilhafterweise ist die keilförmige Hartmetalleiste in einer komplementär ausgeführten Ausnehmung in der Gegenschneide bzw. dem Häckselmesser angeordnet. Dadurch braucht die Geometrie der Vorrichtung nicht gegenüber jener geändert werden, die von Vorrichtungen mit Messern und Gegenschneiden mit Hartmetallbeschichtungen konstanter Dicke bekannt ist.

Nach einer anderen bevorzugten Ausführungsform verändert sich die Dicke der Hartmetallbeschichtung auf der Gegenschneide und/oder dem Häckselmesser kontinuierlich. ZB. kann beim Aufbringen der Hartmetallschicht durch ein thermisches Spritzverfahren die Vorschubgeschwindigkeit der Spritz-pistole oder der Mengendurchsatz pro Zeiteinheit durch die Spritzpistole kontinuierlich verändert werden.

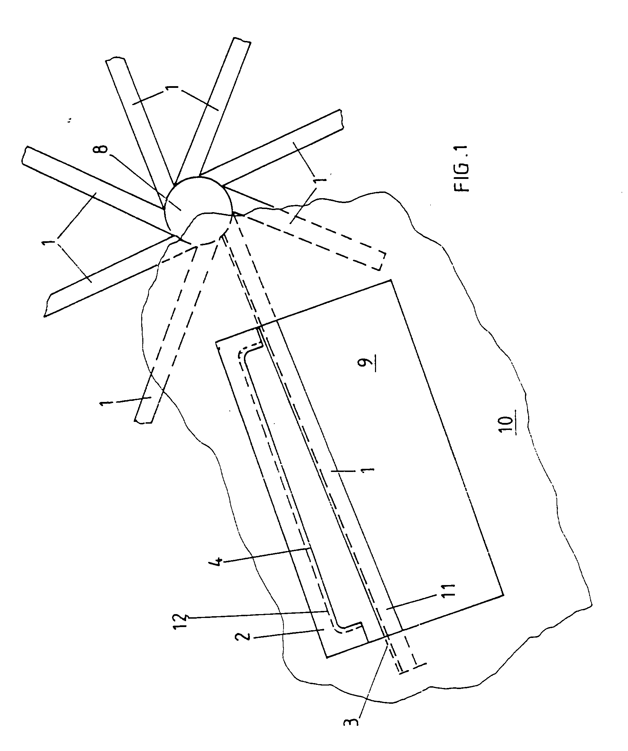

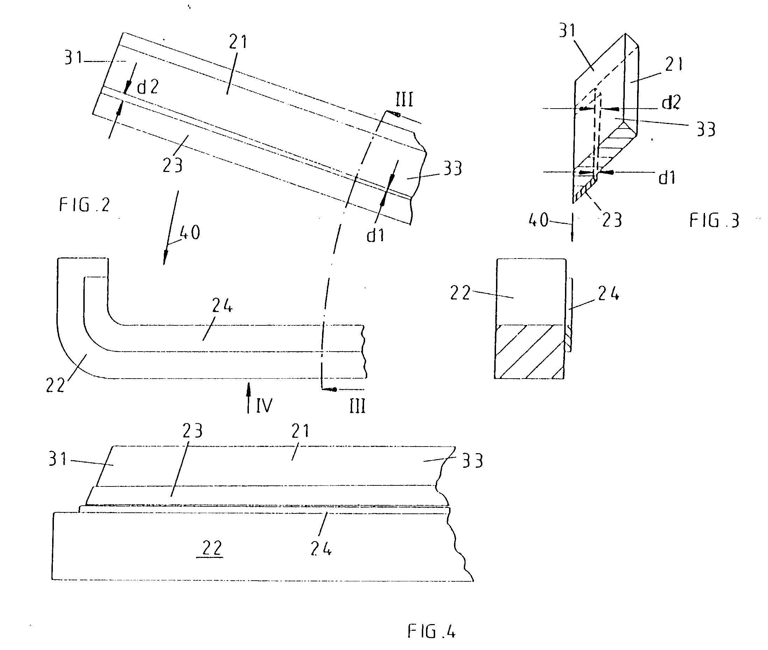

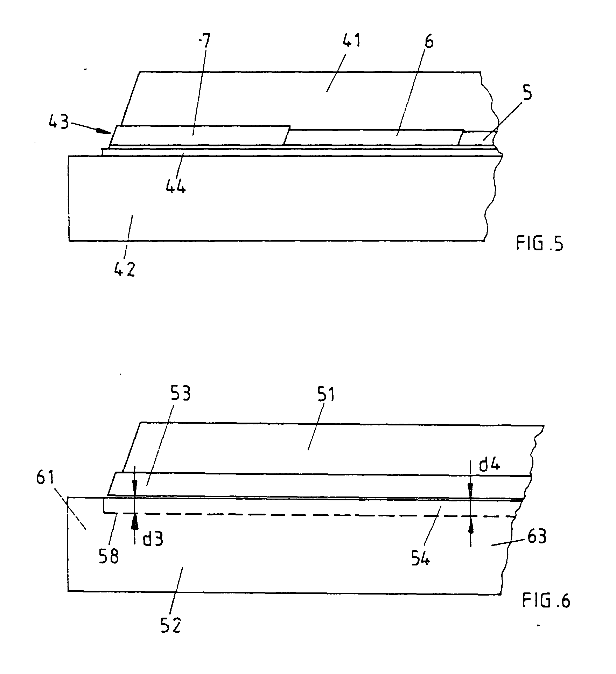

Die vorliegende Erfindung soll nunmehr an Hand der beiliegenden Zeichnungen die verschiedene Ausführungsformen der Erfindung zeigen, erläutert werden. Dabei zeigt Fig.1 eine Draufsicht auf einen Scheibenradhäcksler im Bereich der Zuführöffnung für das Schneidgut im Gehäuse. Die Fig.2 zeigt das wellenferne Ende eines Häckselmessers und den ihm gegenüberliegenden Teil einer Gegenschneide. Fig.3 zeigt einen Schnitt entlang der Linie III-III in Fig.2 und Fig.4 zeigt eine Ansicht in Richtung des Pfeiles IV in Fig.2. Die Fig. 5 und 6 zeigen ein Häckselmesser und eine Gegenschneide in der gleichen Ansicht wie Fig.4 aber mit anderen erfindungsgemäßen Ausführungsformen der Hartmetallbeschichtungen.

Fig. 1 zeigt einen Scheibenradhäcksler, bei dem um eine Welle 8 mehrere Häckselmesser 1 angeordnet sind. Die Ausrichtung der Messer weicht etwas vom radialen Verlauf im Bezug auf die Welle 8 ab. Über eine Öffnung 9 im Gehäuse 10 wird Schneidgut eingebracht. Das Häckselmesser 1 mit seiner Hartmetallbeschichtung 3 wirkt mit der am Rand der Öffnung 9 angebrachten Gegenschneide 2 mit ihrer Hartmetallbeschichtung 4 zusammen und schneidet das Schneidgut. Da die Schneidkante der Gegenschneide 2 radial im Bezug auf die Welle 8 ausgerichtet ist, berühren sich Häckselmesser 1 und Gegenschneide 2 zuerst in dem der Welle 8 näherem Bereich. Beim Fortschreiten des Häckselmessers wandert der Berührungspunkt von Messer 1, mit der Gegenschneide 2 und damit der Schnittpunkt nach außen. Dabei wird das Schneidgut ebenfalls nach außen verschoben, sodaß am äußeren Längsabschnitt 12 der Gegenschneide und am äußeren Abschnitt 11 des Mähmessers mehr Schneidgut geschnitten wird, als in den inneren Bereichen, sodaß es in diesen Abschnitten 11 und 12 zu einer stärkeren Abnützung der Hartmetallbeschichtungen 3,4 kommt. Erfindungsgemäß kann deshalb z.B. wie in den Figuren 2 bis 4 dargestellt, die Hartmetallbeschichtung 23 des Häckselmessers 21 in ihrem äußeren Längsabschnitt 31 eine größere Dicke haben als in ihrem mittleren Längsabschnitt 33 und in ihrem inneren Längsabschnitt. Die Dicke der Hartmetallschicht 23 ist im äußeren Längsabschnitt 31 des Messers 21 mit d2 bezeichnet und insbesondere in den Figuren 2 und 3 erkennt man deutlich, daß die Dicke d2 größer ist als die Dicke d1 der Hartmetallschicht 23 im mittleren Längsbereich 33 des Messers 21. Die Hartmetallschicht 24 der Gegenschneide 22 weist im vorliegenden Beispiel über die gesamte Länge der Gegenschneide 22 eine konstante Dicke auf. Die Bewegungsrichtung des Messers 21 ist durch den Pfeil 40 dargestellt.

Eine weitere Ausführungsform der Erfindung ist in Fig. 5 dargestellt. Hier sind mehrere Hartmetallschichten 5,6,7 übereinander auf dem Häckselmesser 41 aufgebracht, wobei im Bereich der größten Schneidgutmenge zB. vier Schichten übereinander vorgesehen sind, wohingegen am anderen Ende, wo wenig Schneidgut anfällt, nur eine Schicht vorgesehen ist. Die Hartmetallschichten 5,6,7 bilden gemeinsam die Hartmetallbeschichtung 43 des Messers 41. Natürlich können über die Länge des Häckselmessers 41 mehr als drei Abstufungen vorhanden sein, und die Stufen können entsprechend abgeschrägt werden, um eine gute Schnittqualität zu erhalten. Die Schichten 5,6,7 können zB. eine Dicke von je 0,1 mm haben. Die Dicke der Hartmetallbeschichtung 44 der Gegenschneide 43 im gezeigten Beispiel ist konstant.

Schließlich ist in Fig.6 eine Ausführungsform der Erfindung dargestellt, bei der die Hartmetallbeschichtung 53 des Messers 51 über eine gesamte Länge die gleiche Dicke aufweist. Die Gegenschneide 52 weist eine Ausnehmung 58 auf, in die eine komplementäre Hartmetalleiste 54 eingesetzt ist. Die Hartmetalleiste 54 ist keilförmig und die Ausnehmung 58 weist in jeder Längsposition auf der Gegenschneide 52 eine Tiefe auf, die der Dicke der Hartmetalleiste 54 an dieser Längsposition entspricht. Deutlich erkennt man, daß die Dicke d3 der Hartmetalleiste 54 am äußeren Längsabschnitt 61 der Gegenschneide 52 größer ist als die Dicke d4 am mittleren Längsabschnitt 63.

Es können gleichzeitig Messer und Gegenschneiden mit unterschiedlicher Beschichtungsdicke eingesetzt sein. Dies ist besonders sinnvoll, da eine unterschiedliche Beanspruchung der Schneidkanten meist sowohl bei den Messern als auch bei der Schneidleiste auftritt.

## Patentansprüche

1. Häckselvorrichtung zum Häckseln von Schneidgut mit Häckselmessern (1, 21, 41, 51) und einer mit den Häckselmessern zusammenwirkenden Gegenschneide (2, 22, 42, 52), wobei die Häckselmesser und die Gegenschneide im Bereich ihrer Schneidkanten jeweils Hartmetallbeschichtungen (3, 4, 23, 24, 43, 44, 53, 54) aufweisen und die im Betrieb der Vorrichtung zwischen jeweils einem Häckselmesser und der Gegenschneide befindliche Menge an Schneidgut über die Länge der Gegenschneide bzw. des Häckselmessers variiert, **dadurch gekennzeichnet, daß** die Dicke der Hartmetallbeschichtung (3, 4, 23, 24, 43, 44, 53, 54) auf der Gegenschneide (2, 22, 42, 52) und/oder dem Häckselmesser (1, 21, 41, 51) über die Länge der Gegenschneide (2, 22, 42, 52) bzw. des Häckselmessers (1, 21, 41, 51) variiert.

2. Häckselvorrichtung nach Anspruch 1, **dadurch gekennzeichnet, daß** die Dicke der Hartmetallbeschichtung (3,4, 23, 43, 54) auf der Gegenschneide (2, 52) und/oder dem Häckselmesser (1,21, 41) in jenem Längsabschnitt (11, 12, 31, 61) der Gegenschneide (2, 52) bzw. des Häckselmessers (1, 21, 41), in welchem die größte Menge an Schneidgut ist, bis zu dreimal so groß ist, wie in dem übrigen Längsabschnitten.

3. Häckselvorrichtung nach Anspruch 1 oder 2, **dadurch gekennzeichnet, daß** die Hartmetallbeschichtung (34) auf der Gegenschneide und/oder dem Häckselmesser (41) aus mehreren übereinanderliegenden Hartmetallschichten (5,6,7) besteht und daß die Anzahl der übereinanderliegenden Hartmetallschichten (5,6,7) über die Länge der Gegenschneide bzw. des Häckselmessers (41) variiert.

4. Häckselvorrichtung nach Anspruch 1 oder 2, **dadurch gekennzeichnet, daß** die Hartmetallbeschichtung (54) eine mit der Gegenschneide (52) und/oder dem Häckselmesser verbundene Hartmetalleiste (54) ist, die über die Länge der Gegenschneide (52) bzw. des Häckselmessers keilförmig ist.

5. Häckselvorrichtung nach Anspruch 4, **dadurch gekennzeichnet, daß** die keilförmige Hartmetalleiste (54) in einer komplementär ausgeführten Ausnehmung (58) in der Gegenschneide (52) bzw. dem Häckselmesser angeordnet ist.

6. Häckselvorrichtung nach einem der Ansprüche 1,2,4 oder 5, **dadurch gekennzeichnet, daß** sich die Dicke der Hartmetallbeschichtung (23) auf der Gegenschneide und/oder dem Häckselmesser (21) kontinuierlich verändert.

## Claims

1. A chopper for chopping material for cutting, comprising chopping knives (1, 21, 41, 51) and a cutter (2, 22, 42, 52) co-operating with the chopping knives, wherein the chopping knives and the co-operating cutter have hard-metal coatings (3, 4, 23, 24, 43, 44, 53, 54) in the region of their cutting edges and during operation of the device the amount of material for cutting between a chopping knife and the co-operating cutter varies along the length of the co-operating cutter or the chopping knife, **characterised in that** the thickness of the hard-metal coating (3, 4, 23, 24, 43, 44, 53, 54) on the co-operating cutter (2, 22, 42, 52) and/or on the chopping knife (1, 21, 41, 51) varies over the length of the co-operating cutter (2, 22, 42, 52) or the chopping knife (1, 21, 41, 51).

2. A chopper according to claim 1, **characterised in that** the thickness of the hard metal coating (3, 4, 23, 43, 54) on the co-operating cutter (2, 52) and/or the chopping knife (1, 21, 41) **in that** longitudinal section (11, 12, 31, 61) of the co-operating cutter (2, 52) or chopping knife (1, 21, 41) in which the largest amount of material for cutting is disposed, is up to three times as great as in the other longitudinal portions.

3. A chopper according to claim 1 or 2, **characterised in that** the hard metal coating (34) on the co-operating cutter and/or the chopping knife (41) consists of a number of superposed hard metal layers (5, 6, 7), and the number of superposed hard metal layers (5, 6, 7) varies over the length of the co-operating cutter and the chopping knife (41).

4. A chopper according to claim 1 or 2, **characterised in that** the hard metal coating (54) is a hard metal strip (54) connected to the co-operating cutter (52) and/or the chopping knife and wedge-shaped over the length of the co-operating cutter (52) or chopping knife.

5. A chopper according to claim 4, **characterised in that** the wedge-shaped hard metal strip (54) is disposed in a complementary-shaped recess (58) in the co-operating cutter (52) or the chopping knife.

6. A chopper according to any of claims 1, 2, 4 or 5, **characterised in that** the thickness of the hard metal coating (23) on the co-operating cutter and/or on the chopping knife (21) varies continuously.

## Revendications

1. Dispositif de hachage pour le hachage de produit récolté comportant des couteaux (1, 21, 41, 51) ainsi qu'une contre-lame (2, 22, 42, 52) qui coopère avec les couteaux de hachage, les couteaux de hachage et la contre-lame, dans la région de leur tranchant, étant pourvus chacun d'un revêtement en métal dur (3, 4, 23, 24, 43, 44, 53, 54) et la quantité de produit récolté présente entre un couteaux de hachage et la contre-lame pendant le fonctionnement du dispositif variant sur la longueur de la contre-lame ou du couteau de hachage, **caractérisé en ce que** l'épaisseur du revêtement en métal dur (3,4,23,24,43,44, 53, 54) sur la contre-lame (2, 22, 42, 52) et/ou sur le couteau de hachage (1, 21, 41, 51) variant sur la longueur de la contre-lame (2, 22, 42, 52) ou du couteau de hachage (1, 21, 41, 51).

2. Dispositif de hachage selon la revendication 1, **caractérisé en ce que** l'épaisseur du revêtement en métal dur (3, 4, 23, 43, 54) sur la contre-lame (2, 52) et/ou sur le couteau de hachage (1, 21, 41) sur chaque portion de longueur (11, 12, 31, 61) de la contre-lame (2, 52) et/ou du couteau de hachage (1, 21, 41) où l'on a la plus grande quantité de produit récolté est jusqu'à trois fois plus élevée que dans les autres portions de longueur.

3. Dispositif de hachage selon la revendication 1, **caractérisé en ce que** le revêtement en métal dur (34) sur la contre-lame et/ou le couteau de hachage (41) est formé de plusieurs couches (5, 6, 7) de métal dur appliquées les unes sur les autres et **en ce que** le nombre des couches (5, 6, 7) de métal dur empilées varie sur la longueur de la contre-lame ou du couteau de hachage (41).

4. Dispositif de hachage selon la revendication 1 ou 2, **caractérisé en ce que** le revêtement en métal dur (54) est une barre (54) de métal dur, liée à la contre-lame (52) et/ou au couteau de hachage qui présente une forme de coin sur la longueur de la contre-lame (52) et/ou du couteau de hachage.

5. Dispositif de hachage selon la revendication 4, **caractérisé en ce que** la barre (54) de métal dur est montée dans un évidement (58) complémentaire dans la contre-lame (52) ou le couteau de hachage.

6. Dispositif de hachage selon une des revendications 1, 2, 4, **caractérisé en ce que** l'épaisseur du revêtement de métal dur (23) sur la contre-lame (52) et/ou sur le couteau de hachage (21) varie de manière progressive.
